# EUROPEAN PATENT APPLICATION

(11) **EP 4 492 610 A1**
(43) Date of publication of application: **15.01.2025**
(21) Application number: 24187833.9
(22) Date of filing: 10.07.2024
(51) Int. Cl.: H02J 3/14, B60L 53/63, H02J 3/32, H02J 7/00, H02J 7/02

(54) **COMPUTER SYSTEM, PROGRAM, AND METHOD**

(30) Priority: 13.07.2023 JP 2023115147
(71) Applicant: HONDA MOTOR CO., LTD., Minato-ku Tokyo 107-8556 (JP)
(72) Inventor: SAKURAI, Takayuki, Tokyo, 107-8556 (JP); KANAZAWA, Hiroyuki, Tokyo, 107-8556 (JP); ISHIDA, Atsuya, Tokyo, 101-0025 (JP)
(74) Representative: Weickmann & Weickmann PartmbB

(57) **Abstract**

A system includes: a controlling module that provides an electric power grid with an electrical power resource by performing a charging increment control for increasing power charging amounts for the multiple movable batteries, in response to a power consumption increment request for requesting power consumption to be increased; and an estimating module that estimates, based on predicted usage situations of the multiple movable batteries, an amount of electrical power resources that can be provided to the electric power grid by each of the multiple movable batteries by the charging increment control, wherein the predicted usage situations of the multiple movable batteries include a predicted state of charge of the multiple movable batteries, and the estimating module estimates the amount of electrical power resources that can be provided to the electric power grid by each of the multiple movable batteries by the charging increment control such that the state of charge of each of the multiple movable batteries does not exceed a predefined value.

## Description

### BACKGROUND

### 1. TECHNICAL FIELD

The present invention relates to a computer system, a program, and a method.

### 2. RELATED ART

Patent Documents 1 to 7 disclose techniques relating to supply-demand adjustment of an electrical grid.

### PRIOR ART DOCUMENTS

### PATENT DOCUMENTS

Patent Document 1: Japanese Patent Application Publication No. 2021-87261
Patent Document 2: Japanese Patent Application Publication No. 2011-50240
Patent Document 3: Japanese Patent Application Publication No. 2021-150988
Patent Document 4: Japanese Patent Application Publication No. 2021-100326
Patent Document 5: Japanese Patent Application Publication No. 2021-149788
Patent Document 6: Japanese Patent Application Publication No. 2020-108301
Patent Document 7: Japanese Patent Application Publication No. 2021-16288

There is a problem that it is uneasy to effectively use a battery in order to achieve energy conservation.

### SUMMARY

A first aspect of the present invention provides a computer system. The computer system controls charging of multiple movable batteries. The computer system includes a controlling module that provides an electric power grid with an electrical power resource by performing a charging increment control for increasing power charging amounts for the multiple movable batteries, in response to a power consumption increment request for requesting power consumption to be increased. The computer system includes an estimating module that estimates, based on predicted usage situations of the multiple movable batteries, an amount of electrical power resources that can be provided to the electric power grid by each of the multiple movable batteries by the charging increment control. The predicted usage situations of the multiple movable batteries include a predicted state of charge of the multiple movable batteries. The estimating module estimates the amount of electrical power resources that can be provided to the electric power grid by each of the multiple movable batteries by the charging increment control such that a state of charge of each of the multiple movable batteries does not exceed a predefined value.

In the computer system above, the predicted usage situations of the multiple movable batteries may further include timeframes in which the multiple movable batteries are predicted to be used.

In the computer system above, the estimating module may estimate, among the multiple movable batteries, the amount of electrical power resources that can be provided to the electric power grid such that a state of charge of a battery that is not predicted to be used in the predefined period of time does not exceed a predefined value while permitting a state of charge of a battery, among the multiple movable batteries, that is predicted to be used in the predefined period of time to exceed the predefined value.

In the computer system above, the estimating module may estimate the predicted usage situations of the multiple movable batteries based on a usage history of the multiple movable batteries in a past and a usage plan of the multiple movable batteries in a future.

In the computer system above, the predicted usage situations of the multiple movable batteries may include timings at which the multiple movable batteries are predicted to be charged or discharged. In a period in which an electrical power resource contracted in an electricity market should be provided to the electric power grid, the estimating module may estimate the amount of electrical power resources that can be provided to the electric power grid by each of the multiple movable batteries by the charging increment control, by estimating an amount of electrical power resources available to be provided to the electric power grid by changing the timings of charging or discharging the multiple movable batteries for the timings at which the multiple movable batteries are predicted to be charged or discharged.

In the computer system above, the controlling module may perform the charging increment control, in response to the power consumption increment request being received in the period in which the electrical power resource should be provided to the electric power grid and based on the amount of electrical power resources available to be provided to the electric power grid that is estimated by the estimating module.

In the computer system above, the controlling module may further provide the electric power grid with the electrical power resource, by performing at least one of a charging reduction control for reducing the power charging amounts for the multiple movable batteries or a power supply increment control for increasing the power supplying amounts from the multiple movable batteries in response to a power consumption reduction request for requesting a power consumption to be reduced, and performing at least one of the charging increment control or a power supply reduction control for reducing power supplying amounts from the multiple movable batteries to an outside in response to the power consumption increment request. The estimating module may estimate, based on the predicted usage situations of the multiple movable batteries, the amount of electrical power resources that can be provided to the electric power grid by each of the charging reduction control and the power supply increment control, the charging increment control and the power supply reduction control by each of the multiple movable batteries such that the state of charge of each of the multiple movable batteries does not exceed a predefined value.

A second aspect of the present invention provides a computer system. The computer system controls a power supply from multiple movable batteries to the outside. The computer system includes a controlling module that provides an electric power grid with an electrical power resource by performing a power supply increment control for increasing power supplying amounts from the multiple movable batteries, in response to a power consumption reduction request for requesting the power consumption to be reduced. The computer system includes an estimating module that estimates, based on the predicted usage situations of the multiple movable batteries, an amount of electrical power resources that can be provided to the electric power grid by each of the multiple movable batteries by the power supply increment control. The predicted usage situations of the multiple movable batteries include a predicted state of charge of the multiple movable batteries. The estimating module estimates the amount of electrical power resources that can be provided to the electric power grid by each of the multiple movable batteries by the power supply increment control such that the state of charge of each of the multiple movable batteries is not lower than a predefined value.

In any of the computer systems above, the multiple movable batteries may include batteries mounted on vehicles.

In any of the computer systems above, the multiple movable batteries may include batteries that are mounted on the vehicles and exchangeable at multiple stations. Any of the computer systems above may be a control device that controls charging of the multiple movable batteries. Any of the computer systems above may be a control device that controls power supply from the multiple movable batteries to the outside.

A third aspect of the present invention provides a program. The program causes a computer to function as any of the computer systems above. The program may be stored in a non-transitory computer-readable storage medium.

A fourth aspect of the present invention provides a method. The method includes providing an electric power grid with an electrical power resource by performing a charging increment control for increasing power charging amounts for multiple movable batteries, in response to a power consumption increment request for requesting the power consumption to be increased. The method includes estimating, based on the predicted usage situations of the multiple movable batteries, an amount of electrical power resources that can be provided to the electric power grid by each of the multiple movable batteries by the charging increment control. The predicted usage situations of the multiple movable batteries include a predicted state of charge of the multiple movable batteries. In the estimating the amount of electrical power resources that can be provided to the electric power grid by the charging increment control, the amount of electrical power resources that can be provided to the electric power grid by each of the multiple movable batteries by the charging increment control is estimated such that the state of charge of each of the multiple movable batteries does not exceed a predefined value.

A fifth aspect of the present invention provides a method. The method includes providing an electric power grid with an electrical power resource by performing a power supply increment control for increasing power supplying amounts from multiple movable batteries, in response to a power consumption reduction request for requesting the power consumption to be reduced. The method includes estimating, based on the predicted usage situations of the multiple movable batteries, the amount of electrical power resources that can be provided to the electric power grid by each of the multiple movable batteries by the power supply increment control. The predicted usage situations of the multiple movable batteries include a predicted state of charge of the multiple movable batteries. In the estimating the amount of electrical power resources that can be provided to the electric power grid by the power supply increment control, the amount of electrical power resources that can be provided to the electric power grid by each of the multiple movable batteries by the power supply increment control is estimated such that the state of charge of each of the multiple movable batteries is not lower than a predefined value.

The summary clause does not describe all necessary features of the present invention. The invention may also include a sub-combination of the features described above.

### BRIEF DESCRIPTION OF THE DRAWINGS

FIG. 1 illustrates an outline of a utilization form of an electrical power system 5 in one embodiment.
FIG. 2 illustrates one example of a system configuration of a system 100.
FIG. 3 is a graph schematically showing predicted electrical power 301 predicted to be consumed in a provision period, and a target electrical power 302.
FIG. 4 is a graph schematically showing estimated electrical power 311 in a provision period.
FIG. 5 is a graph schematically showing required electrical power 331 required for the system 100 to secure in a provision period.
FIG. 6 is a diagram for explaining one example of a method of calculating an electrical power resource available to be provided by a vehicle 10.
FIG. 7 is a diagram for explaining another example of the method of calculating an electrical power resource available to be provided by the vehicle 10.
FIG. 8 is a diagram for explaining yet another example of the method of calculating an electrical power resource available to be provided by the vehicle 10.
FIG. 9 schematically illustrates total electrical power and a total electrical energy available to be provided by all stations 30.
FIG. 10 schematically illustrates one example of an electrical power resource allocated by an allocating unit 230 to the required electrical power 331.
FIG. 11 shows a schematic diagram for explaining an electrical power resource allocated to battery 12a.
FIG. 12 shows a schematic diagram for explaining an electrical power resource allocated to battery 12b and battery 12c.
FIG. 13 shows a schematic diagram for explaining an electrical power resource allocated to battery 12d and battery 12e.
FIG. 14 is a graph for explaining a control for limitng the provision of the electrical power resource by a second control.
FIG. 15 is another graph for explaining a control for limiting the provision of the electrical power resource by a second control.
FIG. 16 is a diagram for explaining one example of a method of calculating an electrical power resource available to be provided by a vehicle 10a considering an integrated value of discharging power.
FIG. 17 is a diagram for explaining a control that depends on SOC for the batteries 12 to provide the electrical power resource.
FIG. 18 is a diagram for explaining one example of a method of calculating an electrical power resource available to be provided by a vehicle 10d and a vehicle 10e considering an integrated value of discharging power.
FIG. 19 illustrates one example of change in consumption power over time caused by control of a station 30.
FIG. 20 is a flowchart showing procedures of processing executed by the system 100.
Fig. 21 illustrates an example of a computer 2000.

### DESCRIPTION OF EXEMPLARY EMBODIMENTS

Hereinafter, embodiments of the present invention will be explained. However, the following embodiments do not limit the invention according to the claims. In addition, some combinations of features explained in the embodiments may be unnecessary for the solving means of the invention.

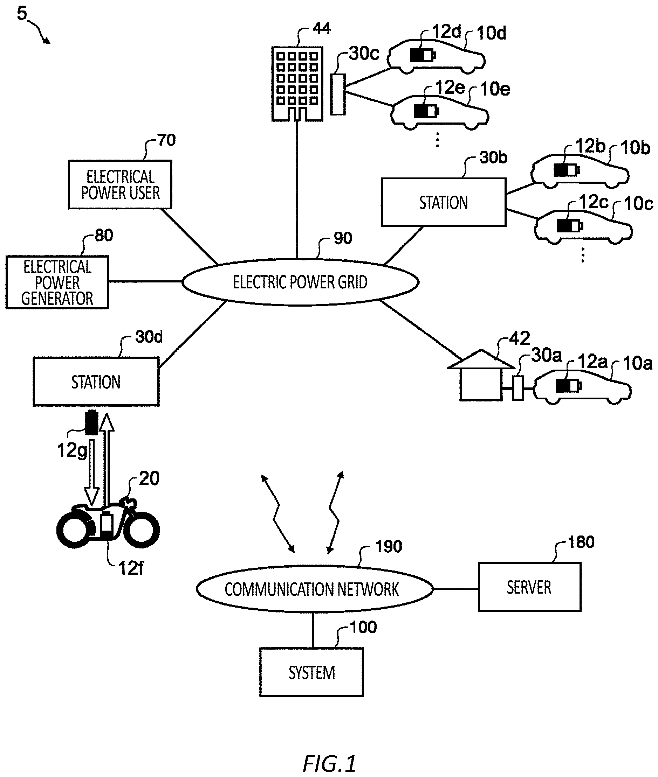

FIG. 1 illustrates an outline of a utilization form of an electrical power system 5 in one embodiment. The electrical power system 5 includes a station 30a, a station 30b, a station 30c, and a station 30d, an electrical power generator 80, a system 100, a server 180, and a vehicle 10a, a vehicle 10b, a vehicle 10c, a vehicle 10d, a vehicle 10e, and a vehicle 20.

In the present embodiment, the stations 30a, 30b, 30c, and 30d may be collectively referred to as a "station 30". The vehicles 10a, 10b, 10c, 10d, and 10e may be collectively referred to as a "vehicle 10". The vehicles 10a, 10b, 10c, 10d, and 10e include a battery 12a, a battery 12b, a battery 12c, a battery 12d, and a battery 12e, respectively. The batteries 12a, 12b, 12c, 12d, and 12e may be collectively referred to as a "battery 12".

The system 100 is connected to the server 180 via a communication network 190. The server 180 can communicate with the station 30 via the communication network 190. The system 100 controls the station 30 via the communication network 190. The system 100 communicates with the vehicle 10 via the communication network 190, and obtains various pieces of information on the vehicle 10 such as a travel record of the vehicle 10 or SOC of the battery 12.

The station 30, an electrical power user 70, and the electrical power generator 80 are connected to the electric power grid 90. The electrical power generator 80 includes a power plant operated by an electrical power company, for example. Electrical power generated by the electrical power generator 80 can be supplied to the station 30 and the electrical power user 70 via the electric power grid 90. The electric power grid 90 is an electrical power system, for example.

Each station 30 charges and discharges the battery 12 mounted on the vehicle 10 connected thereto, or put the charging/discharging on hold. The vehicle 10 is an electric vehicle, for example. The battery 12 is a battery for supplying the vehicle 10 with electrical power for travelling. The vehicle 10 may be a privately owned vehicle, a vehicle used by a businessman for his business, or a shared car. The battery 12 is one example of a movable battery. The battery 12 can be mounted on the vehicle 10 and be movable thereon.

The station 30a is provided at a private house 42, and charges and discharges the battery 12a of the vehicle 10a connected to the station 30a. The station 30b is a public charging/discharging station, and charges and discharges batteries 12 mounted on multiple vehicles 10 including the vehicle 10b and vehicle 10c connected to the station 30b. The station 30c is a station provided at a facility 44, and charges and discharges batteries 12 mounted on multiple vehicles 10 including the vehicle 10d and vehicle 10e connected to the station 30c.

The station 30d holds multiple batteries available to be mounted on vehicles 20, and charges and discharges the multiple batteries held therein. The vehicles 20 are electric motorcycles, for example. A battery 12f used by the vehicle 20 is exchanged at the station 30d. By way of example, the battery 12f used for travel of the vehicle 20 is exchanged for a battery 12g charged at the station 30d, which is then installed on the vehicle 20. The battery 12f and battery 12g are examples of movable batteries. The battery 12f and battery 12g can be movable by being mounted on the vehicles 20. The battery 12f and battery 12g can also be movable by being carried by one's hand.

Each station 30 can charge the battery 12 with electrical power supplied by the electric power grid 90. The station 30 can discharge the battery 12 and thereby supply the electric power grid 90 with power.

Each station 30 charges and discharges the battery 12 according to control of the system 100. For example, when the electric power grid 90 has insufFicient power, the system 100 can cause electrical power to be supplied to the electric power grid 90 by causing the station 30 to discharge the battery 12. When the electric power grid 90 has surplus power, the system 100 can cause the surplus power of the electric power grid 90 to be reduced by causing the station 30 to charge a battery. The system 100 can provide a primary adjusting capability, a secondary adjusting capability, and a tertiary adjusting capability for the electric power grid 90 by using the station 30. As above, the system 100 can collectively manage multiple batteries 12 as an electrical power resource for the electric power grid 90.

The server 180 is used by an electricity aggregator, for example. The server 180 conducts electrical power trading in an electricity market. The system 100 can provide the server 180 with the batteries 12 managed as the electrical power resource. The system 100 controls charging/discharging of a battery, which is performed by the station 30, and provides the electric power grid 90 with an amount of electrical power contracted by the server 180. For example, in response to a demand from the server 180, the system 100 controls charging/discharging of the battery 12 which is performed by the station 30, and provides an amount of electrical power depending on the demand.

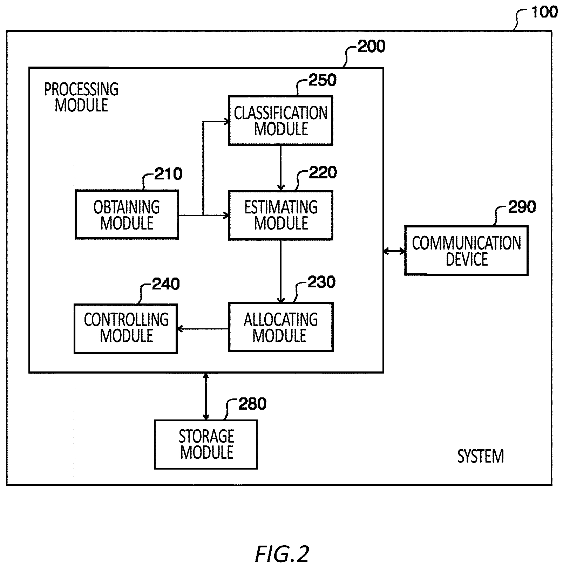

FIG. 2 illustrates one example of a system configuration of the system 100. The system 100 includes a processing module 200, a storage module 280, and a communication device 290.

The processing module 200 controls the communication device 290. The communication device 290 performs communication between the station 30a and the server 180. The processing module 200 is embodied as an arithmetic processing unit including a processor. Each storage module 280 is embodied including a non-volatile storage medium. The processing module 200 performs processing by using information stored in the storage module 280. The processing module 200 may be embodied as a microcomputer including a CPU, ROM, RAM, I/O, bus, and the like. The system 100 may be embodied as a computer.

In the present embodiment, it is assumed that the system 100 is embodied as a single computer. However, the system 100 may be embodied as multiple computers in another embodiment. At least a part of functions of the system 100 may be performed by one or more servers such as a cloud server.

The processing module 200 includes an obtaining module 210, an estimating module 220, an allocating unit 230, a controlling module 240, and a classification module 250.

The obtaining module 210 obtains a travel record of the vehicle 10, and a charging/discharging history of the battery 12. The obtaining module 210 may obtain the travel record transmitted from the vehicle 10 to the system 100. The travel record of the vehicle 10 may contain information in which a location of the vehicle 10, and SOC and a date and time of the battery 12 are associated. The obtaining module 210 may obtain the charging/discharging history transmitted from the vehicle 10 to the system 100. The obtaining module 210 may also obtain a charging/discharging history of the battery 12 transmitted from the station 30. The charging/discharging history may contain information in which a charging/discharging amount and a date and time of the battery 12 are associated. The obtaining module 210 may obtain information representing a current state of the vehicle 10. The current state of the vehicle 10 may include a current location of the vehicle 10, a current SOC of the battery 12, and the like. The estimating module 220, allocating unit 230, and controlling module 240 may perform processing based on the information obtained by the obtaining module 210.

The system 100 controls charging of the battery 12, and power supply from the battery 12 to an outside. The controlling module 240 provides an electric power grid 90 with an electrical power resource by performing at least one of a first control for reducing power charging amounts for the batteries 12, or a second control for increasing power supplying amounts from the batteries 12, in response to a first request for requesting power consumption to be reduced. The controlling module 240 may provide the electric power grid 90 with the electrical power resource by performing at least one of a third control for increasing power charging amounts for the batteries 12 or a fourth control for reducing power supplying amounts from the batteries 12 to the outside, in response to a second request for requesting power consumption to be increased. The electrical power resource may be electrical power or electrical energy. Providing the electric power grid 90 with the electrical power resource does not only mean supplying the electric power grid 90 with electrical power, but also includes increasing electrical power demand of the electric power grid 90, and reducing electrical power demand of the electric power grid 90.

The estimating module 220 estimates by which of the first control or the second control, each battery 12 can provide the electric power grid 90 with the electrical power resource based on predicted usage situations of the batteries 12. The estimating module 220 estimates an amount of electrical power resources that can be provided to the electric power grid 90 by each of the first control and the second control by each battery 12 based on the predicted usage situations of the batteries 12. The estimating module 220 may estimate by which of the first control, the second control, the third control, or the fourth control, each battery 12 can provide the electric power grid 90 with the electrical power resource based on the predicted usage situations of the batteries 12. For example, the estimating module 220 may estimate an amount of electrical power resources that can be provided to the electric power grid 90 by each of the first control, the second control, the third control, or the fourth control by each battery 12 based on the predicted usage situations of the batteries 12.

The estimating module 220 may estimate an amount of electrical power resources that can be provided to the electric power grid 90 by each of the first control and the second control by each battery 12 in each of multiple timeframes in a future based on predicted usage situations of the batteries 12. The estimating module 220 may estimate an amount of electrical power resources that can be provided to the electric power grid 90 by each of the first control, the second control, the third control, or the fourth control by each battery 12 in each of multiple timeframes in a future based on the predicted usage situations of the batteries 12. The estimating module 220 may estimate, based on a target value of consumption power to be consumed by the battery 12 in every timeframe in the future, and a prediction of a charging/discharging amount of the battery 12 in the future, an electrical power resource required to be provided to the electric power grid 90 in each of multiple timeframes in the future.

The predicted usage situation of the battery 12 includes a timeframe in which the battery 12 is predicted to be used, for example. The predicted usage situations of the batteries 12 may further include predicted charging states (for example, state of charges) of the batteries 12. The estimating module 220 may estimate the predicted usage situation of the battery 12 based on a usage history of the battery 12 in the past, and a usage plan of the battery 12 in the future.

The predicted usage situation of the battery 12 may include a timing at which the battery 12 is predicted to be charged or discharged. In a period in which the electrical power resource contracted in the electricity market should be provided to the electric power grid 90, the estimating module 220 estimates an amount of electrical power resources available to be provided to the electric power grid 90 by changing the timing of the charging or discharging of the battery 12 for a timing at which the battery 12 is predicted to be charged or discharged. Estimating in this way may permit the estimating module 220 to estimate the amount of electrical power resources that can be provided to the electric power grid 90 by each battery 12 by using each of the first control, second control, third control and fourth control.

The estimating module 220, allocates control, among the first control and the second control, with which the electrical power resource is provided to the electric power grid 90 from the batteries 12 in each timeframe in a period in which the electrical power resource contracted in the electricity market should be provided to the electric power grid 90, based on an amount of electrical power resources available to be provided to the electric power grid 90 by each battery 12 and an amount of electrical power resources required to be provided to the electric power grid 90, wherein the first control may be preferentially allocated over the second control. The estimating module 220 may allocate control, among the first control, the second control, the third control, and the fourth control, with which the electrical power resource is provided to the electric power grid 90 from the batteries 12 in each timeframe in a period in which the electrical power resource contracted in the electricity market should be provided to the electric power grid 90, based on the amount of electrical power resources available to be provided to the electric power grid 90 by each battery 12 and the amount of electrical power resources required to be provided to the electric power grid 90. The controlling module 240 may perform: at least one of the first control or the second control, in response to a first request being received within the period in which the electrical power resource should be provided to the electric power grid 90 and based on the amount of electrical power resources estimated by the estimating module 220 as being available to be provided to the electric power grid 90; and at least one of the third control or the fourth control, in response to a second request being received within the period in which the electrical power resource should be provided to the electric power grid 90 and based on the amount of electrical power resources estimated by the estimating module 220 as being available to be provided to the electric power grid 90.

The controlling module 240 may perform at least one of: the first control or the second control, in response to the first request being received within the period in which the electrical power resource should be provided to the electric power grid 90 and based on the amount of electrical power resources estimated by the estimating module 220 as being available to be provided to the electric power grid 90; and at least one of the third control or the fourth control, in response to the second request being received within the period in which the electrical power resource should be provided to the electric power grid 90 and based on the amount of electrical power resources estimated by the estimating module 220 as being available to be provided to the electric power grid 90.

The allocating unit 230 allocates control, among the first control and the second control, with which each battery 12 provides the electric power grid 90 with the electrical power resource in each of the multiple timeframes in the future, based on the amount of electrical power resources available to be provided to the electric power grid 90 by each battery 12 and an amount of electrical power resources required to be provided to the electric power grid 90. Especially, the allocating unit 230 allocates control, among the first control and the second control, with which each battery 12 provides the electric power grid 90 with the electrical power resource in each of the multiple timeframes in the future, based on the amount of electrical power resources available to be provided to the electric power grid 90 by each battery 12 and the amount of electrical power resources required to be provided to the electric power grid 90, wherein the first control is preferentially allocated over the second control.

In each of the multiple timeframes in the future, the allocating unit 230 performs (i) an allocation so as to provide the electric power grid 90 with the electrical power resource by only the first control in each timeframe when a total amount of electrical power resources which can be provided to the electric power grid 90 by the batteries 12 by the first control is greater than or equal to the amount of electrical power resources required to be provided to the electric power grid 90, and (ii) an allocation so as to provide, by the second control, an electrical power resource that cannot be provided to the electric power grid 90 by the first control in each timeframe, when the total amount of electrical power resources which can be provided to the electric power grid 90 by the batteries 12 by the first control is less than the amount of electrical power resources required to be provided to the electric power grid 90. Specifically, in each of the multiple timeframes in the future, the allocating unit 230 performs (i) an allocation so as to provide the electric power grid with the electrical power resource by only the first control in each timeframe when a total amount of electrical power resources that the estimating module 220 estimates can be provided to the electric power grid 90 by the batteries 12 by the first control is greater than or equal to the amount of electrical power resources required to be provided to the electric power grid 90, and (ii) an allocation so as to provide, by the second control, an electrical power resource that cannot be provided to the electric power grid 90 by the first control in each timeframe, when the total amount of electrical power resources that the estimating module 220 estimates can be provided to the electric power grid 90 by the batteries 12 estimated by the first control is less than the amount of electrical power resources required to be provided to the electric power grid 90.

The allocating unit 230 allocates control, based on an amount of electrical power resources available to be provided to the electric power grid 90 by each battery 12, and an amount of electrical power resources required to be provided to the electric power grid 90, among the first control, second control, third control, and fourth control, with which each battery 12 provides the electric power grid 90 with the electrical power resource in each of multiple timeframes in the future. For example, the allocating unit 230 may allocate an amount of electrical power resources to be provided to the electric power grid 90 by at least any of the first control, the second control, the third control, or the fourth control by each battery 12 in each of the multiple timeframes in the future.

The allocating unit 230 may preferentially allocate the fourth control over the third control in a case in which whether each battery 12 provides the electric power grid 90 with the electrical power resource is allocated. The allocating unit 230 may allocate control, so as to bring changes in electrical charging power or discharging power of the batteries 12 to be equal to or less than predefined values, among the first control, the second control, the third control, and the fourth control, with which each battery 12 provides the electric power grid 90 with the electrical power resource in each of the multiple timeframes in the future.

The classification module 250 classifies, based on at least one of an integrated value of the discharging power or soundness of each battery 12, each of the batteries 12 into a battery that can be used for both the first control and the second control, and a battery that can be used for the first control but is not used for the second control. The estimating module 220 may estimate by which of the first control or the second control, each battery 12 can provide the electric power grid 90 with the electrical power resource based on a classification result obtained by the classification module 250 and the predicted usage situations of the batteries 12. The estimating module 220 may estimate by which of the first control, the second control, the third control, or the fourth control, each battery 12 can provide the electric power grid 90 with the electrical power resource based on the classification result obtained by the classification module 250 and the predicted usage situations of the batteries 12.

The classification module 250 may classify, among the batteries 12, a battery having an integrated value of the discharging power exceeding a predefined value, into a battery that can be used for the first control but is not used for the second control. The classification module 250 may classify, among the batteries 12, a battery having soundness lower than a predefined value, into a battery that can be used for the first control but is not used for the second control. The classification module 250 may classify, based on an integrated value or the discharging power of each battery 12, each of the batteries 12 into a battery that can be used for both the first control and the second control, and a battery that can be used for the first control but is not used for the second control. The discharging power may not include an electrical power used for traveling of the vehicle 20.

If the predicted usage situations of batteries 12 include predicted state of charges of the batteries 12, the estimating module 220 may estimate an amount of electrical power resources that can be provided to the electric power grid 90 by each battery 12 by the third control, such that a state of charge of each battery 12 does not exceed a predefined first value. The estimating module 220 may estimate an amount of electrical power resources that can be provided to the electric power grid 90 by each of the first control, the second control, the third control, or the fourth control by each battery 12 based on the predicted usage situations of the batteries 12, such that the state of charge of each battery 12 does not exceed a predefined value. If the predicted usage situations of the batteries 12 further include a timeframe in which the battery 12 is predicted to be used, the estimating module 220 may estimate the amount of electrical power resources that can be provided to the electric power grid 90 such that a state of charge of a battery that is not predicted to be used in a predefined period of time does not exceed a predefined first value while permitting a state of charge of a battery that is predicted to be used in a predefined period of time among the batteries 12 to exceed the predefined first value.

If the predicted usage situations of batteries 12 include predicted state of charges of the batteries 12, the estimating module 220 may estimate an amount of electrical power resources that can be provided to the electric power grid 90 by each battery 12 by the second control, such that the state of charge of each battery 12 is not lower than a predefined second value. The second value may be lower than the first value. A charging reduction control corresponds to the first control, the power supply increment control corresponds to the second control, a charging increment control corresponds to the third control, and the power supply reduction control corresponds to the fourth control.

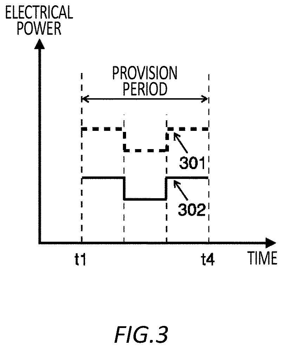

FIG. 3 is a graph schematically showing predicted electrical power 301 predicted to be consumed in a provision period, and a target electrical power 302. In the present embodiment, the "provision period" refers to a period in which electrical energy contracted in the electricity market should be provided. Provision periods shown from FIG. 3 to FIG. 12 are periods from time t1 to time t4.

The predicted electrical power 301 is an expected value of electrical power demand generated under management of the system 100. For example, the predicted electrical power 301 is a reference value of electrical power demand in every thirty minutes, which is used when trading in the electricity market. The target electrical power 302 is defined by subtracting electrical energy contracted in the electricity market from the predicted electrical power 301. The target electrical power 302 is consumption power that should be maintainable by the system 100 in order to ensure that the electric power grid 90 is provided with the electrical energy contracted in the electricity market.

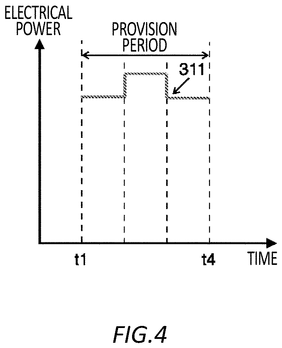

FIG. 4 is a graph schematically showing an estimated electrical power 311 in a provision period. The estimated electrical power 311 represents an estimation value of consumption power consumed by charging of the battery 12, which is controlled by the system 100. The estimated electrical power 311 may be estimated based on a charging plan of the battery 12 in the provision period in the future, prediction of vehicles 10 which enters or leaves the station 30, a history of charging/discharging amount of the battery 12 in every timeframe in the past, and the like. The estimated electrical power 311 is estimated by the estimating module 220.

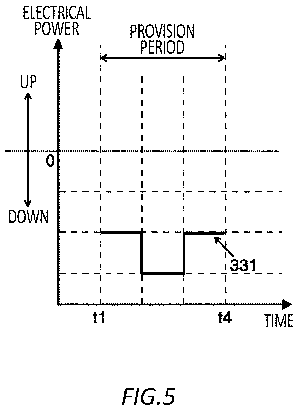

FIG. 5 is a graph schematically showing a required electrical power 331 required for the system 100 to secure in the provision period. The required electrical power 331 is calculated by subtracting the estimated electrical power 311 from the target electrical power 302. In FIG. 5, a vertical axis shows difference in electrical power. If a required electrical power is less than zero such as the required electrical power 331 shown in FIG. 5, it is indicated that consumption power may need to be reduced in response to down demand. If the required electrical power is more than zero, it is indicated that the consumption power may need to be increased in response to up demand.

The controlling module 240 can provide the electric power grid 90 with electrical energy contracted in the electricity market in a provision period by adjusting a charging/discharging plan of the battery 12 in the future so that the required electrical power 331 can be provided.

The controlling module 240 performs, if down demand for reducing electrical power demand, which is issued by the server 180 in a period where the required electrical power is less than zero, is received, either the first control or the second control in response to the down demand. In the first control, electrical power consumed by charging the battery 12 is reduced, and in the second control, overall consumption power is reduced by discharging the battery 12 and supplying power to an outside of the vehicle 10. The controlling module 240 performs, if up demand for increasing electrical power demand, which is issued by the server 180 in a period where the required electrical power is more than zero, is received, either the third control or the fourth control in response to the up demand. In the third control, electrical power consumed for charging the battery 12 is increased, and in the fourth control, overall consumption power is increased by reducing power being discharged from the battery 12 and supplied to an outside of the vehicle 10.

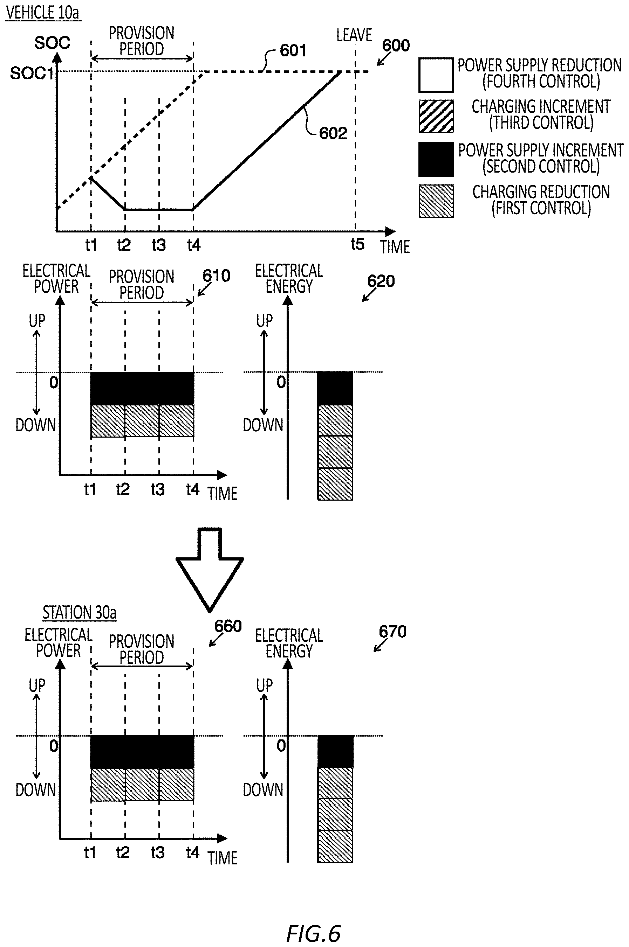

FIG. 6 is a diagram for explaining one example of a method of calculating an electrical power resource available to be provided by the vehicle 10. Here, an example case will be shown in which, there is a period of time required for charging the battery 12a from finishing time of the provision period until predicted leaving time of the vehicle 10a from the station. Explained below in regard to FIGs. 6 to 12 are cases in which, mainly the battery 12 of the vehicle 10 provides the electrical power resource to the electric power grid 90.

A line 601 of a graph 600 shows change in SOC over time based on a plan of charging/discharging the battery 12a of the vehicle 10a. A line 602 of the graph 600 shows one example of the change in SOC of the battery 12a over time when the plan of charging/discharging has been modified in order to provide the electrical power resource within the provision period.

The first control for not causing the battery 12a to be charged can be performed in all timeframes from time t1 to time t4. The second control for discharging the battery 12a and supplying power to an outside of the vehicle 10 can be performed in any timeframe from time t1 to time t4, as long as SOC is not excessively reduced. For example, SOC change shown with the line 602 represents a case in which the second control is performed from time t1 to time t2 while performing the first control in all timeframes from time t1 to time t4. When adapting to the case shown in FIG. 5 in which the down demand in a timeframe from time t2 to time t3 is especially large, the second control may be performed from time t2 to time t3 (which is omitted from illustration). Next, by starting to charge the battery 12a from time t4, the battery 12a can be charged until its SOC meets a target SOC1 before predicted leaving time t5 of the vehicle 10a from the station.

A graph 610 shows electrical power available to be provided from the battery 12a in each timeframe. As described above, reducing the power charging amount for the battery 12a by the first control can be executed in all timeframes from time t1 to time t4. The second control can be performed in any timeframe from time t1 to time t4. However, in this example, it is apparent from the line 602 that there is one timeframe available for executing the second control. As represented with square frames in the graph 610, the first control can be selected in all of three frames, and the second control can be selected in one of the three frames. In timeframes corresponding to these frames, electrical power for serving the down demand can be provided.

A graph 620 shows electrical energy available to be provided from the battery 12a. As described above, since the first control can be executed in all timeframes from time t1 to time t4, it can be represented with electrical power resources of three timeframes. The second control in the case of this example is represented with an electrical power resource of one timeframe.

A graph 660 shows electrical power available to be provided from the station 30a in each timeframe. The graph 670 shows electrical energy available to be provided from the station 30a. Because the station 30a can only be connected to one vehicle 10a, the graph 660 is identical to the graph 610, and the graph 670 is identical to the graph 620.

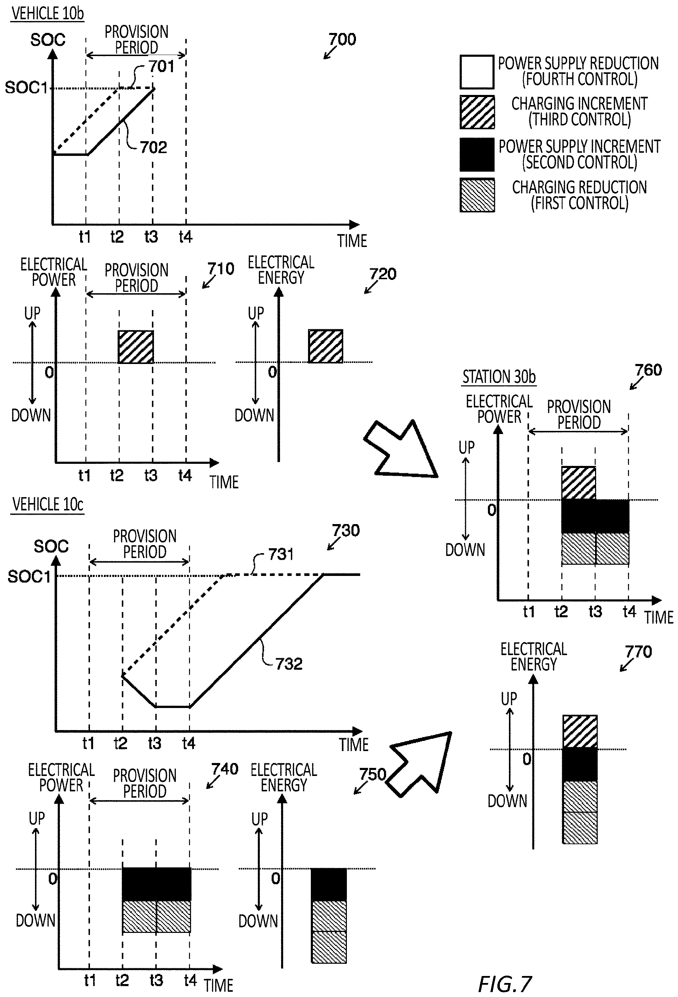

FIG. 7 is a diagram for explaining another example of the method of calculating an electrical power resource available to be provided by the vehicle 10. Here, a case will be shown in which, the vehicle 10b is predicted to leave from the station 30b at time t3 during the provision period, and the vehicle 10c is predicted to enter the station 30b at time t2 during the provision period.

A line 701 of a graph 700 shows change in SOC over time based on a plan of charging/discharging the battery 12b of the vehicle 10b. A line 702 of the graph 700 shows the change in SOC of the battery 12b over time when the plan of charging/discharging has been modified in order to provide the electrical power resource within the provision period. Here, it is assumed that in the plan of charging/discharging, charging of the battery 12b is scheduled to start before time t1.

Against this, as shown with the line 702, the battery 12b is charged by starting the charging of the battery 12b from time t1, and performing the third control from time t2 to time t3. In this way, a power charging amount can be increased from time t2 to time t3. Therefore, electrical power for responding to the up demand can be provided from the battery 12b.

A graph 710 shows electrical power available to be provided from the battery 12b in each timeframe. As described above, by performing the third control from time t2 to time t3, electrical power for responding to the up demand can be provided. Therefore, as shown with the graph 710, by performing the third control, a fixed amount of electrical power for responding to the up demand can be provided.

A graph 720 shows electrical energy available to be provided from the battery 12b. As described above, by performing the third control from time t2 to time t3, a fixed amount of electrical energy for responding to the up demand can be provided from the battery 12b.

A line 731 of a graph 730 shows change in SOC over time based on a plan of charging/discharging the battery 12c of the vehicle 10c. A line 732 of the graph 730 shows change in SOC of the battery 12c over time when the plan of charging/discharging has been modified in order to provide the electrical power resource within the provision period. Here, it is assumed that in the plan of charging/discharging, charging the battery 12b is scheduled to start from entering time t2 of the vehicle 10c into the station.

Against this, as shown with the line 732, by performing the second control for discharging the battery 12c and supplying power to an outside of the vehicle 10 while performing the first control for not charging the battery 12c from time t2 to time t3, electrical power for responding to the down demand can be provided from the battery 12c from time t2 to time t3. By performing the first control for not charging the battery 12c from the following time t3 to time t4, electrical power for responding to the down demand can be provided from time t3 to time t4. Next, by starting the charging of the battery 12c from time t4, the battery 12c of the vehicle 10c can be rapidly charged until its SOC meets a target SOC1.

A graph 740 shows electrical power available to be provided from the battery 12c in each timeframe. By performing the second control from time t2 to time t3 as described above, electrical power for responding to the down demand can be provided. Similarly, the second control can be performed from time t3 to time t4. As above, the second control can be performed in any fixed period from time t2 to time t4. A graph 740 illustrates an example of timeframes in which the second control can be performed. Further, by reducing a power charging amount for the battery 12c from time t2 to time t4 by using the first control as described above, electrical power for responding to the down demand can be provided as compared with the plan of charging/discharging shown with the line 731.

A graph 750 shows electrical energy available to be provided from the battery 12c. By performing the second control in a fixed period from time t2 to time t4 as described above, a fixed amount of electrical energy for responding to the down demand can be provided. In addition, by performing the first control from time t2 to time t4 as described above, electrical energy for responding to the down demand can be provided as shown with graph 750. As shown with the graph 750, the electrical energy available to be provided by performing the first control is electrical energy obtained by integrating electrical charging power that is reduced from time t2 to time t4.

A graph 760 shows electrical power available to be provided from the station 30b in each timeframe. A graph 770 shows electrical energy available to be provided from the station 30b. The graph 760 is obtained by adding the graph 710 to the graph 740. The graph 770 is obtained by adding the graph 720 to the graph 750.

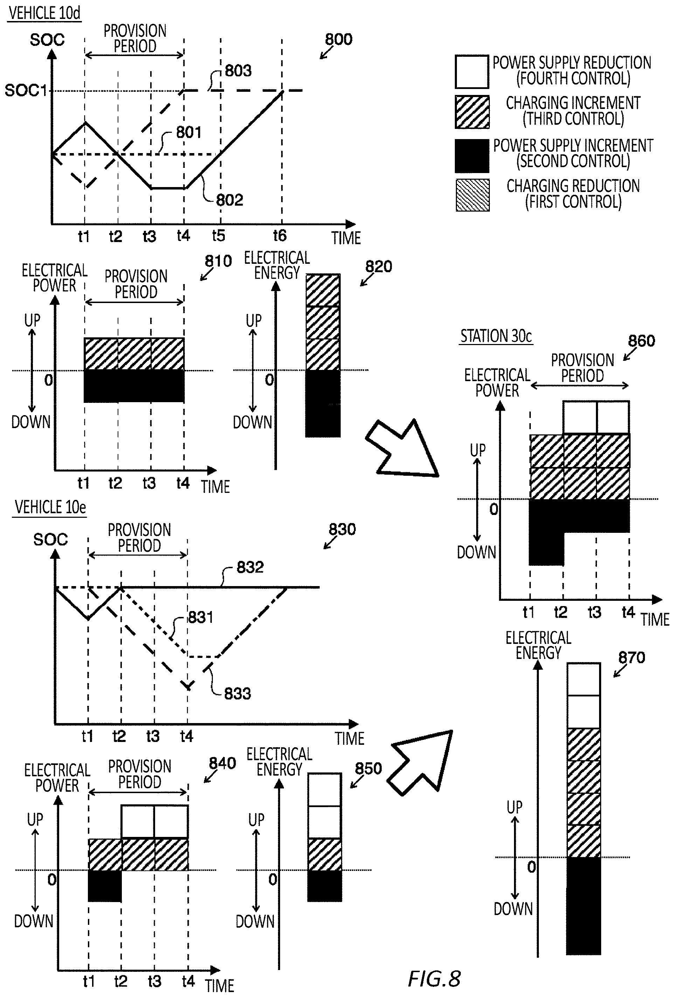

FIG. 8 is a diagram for explaining another example of the method of calculating an electrical power resource available to be provided by the vehicle 10. Here, it is assumed that there is no schedule of charging/discharging the battery 12d of the vehicle 10d within the provision period, and there is a schedule of performing timer charging on the battery 12d from time t5 to time t6. It is assumed that the vehicle 10e is scheduled to supply the facility 44 with power from time t2 to time t4.

A line 801 of a graph 800 shows change in SOC over time based on a plan of charging/discharging the battery 12d of the vehicle 10d. A line 802 of the graph 800 shows change in SOC of the battery 12d over time when the plan of charging/discharging has been modified in order to provide the electrical power resource in response to the first request within the provision period. A line 803 of the graph 800 shows change in SOC of the battery 12d over time when the plan of charging/discharging has been modified in order to provide the electrical power resource in response to the second request within the provision period.

As shown with the line 802, charging of the battery 12d starts before time t1, and the battery 12d is discharged by performing the second control from time t1 to time t3, then no charging/discharging are performed on the battery 12d from time t3 to time t4, and charging of the battery 12d starts from time t4 when the provision period ends. In this way, a power supplying amount from the battery 12d to an outside of the vehicle 10d can be increased from time t1 to time t3. Therefore, electrical power for responding to the down demand can be provided from the battery 12d.

As shown with the line 803, by starting the discharging of the battery 12d before time t1, and performing the third control from time t1 to time t4, the battery 12d is charged until its SOC meets a target SOC1. In this way, a power charging amount for the battery 12d can be increased from time t1 to time t4. Therefore, electrical power for responding to the up demand can be provided from the battery 12d.

A graph 810 shows electrical power available to be provided from the battery 12d in each timeframe. If performing the control shown with the line 802 in a way described above, electrical power for responding to the down demand can be provided by performing the second control in a period of two timeframes from time t1 to time t3. The second control can be performed in a period of two timeframes from time t2 to time t4. As above, the second control can be performed in a period of any two timeframes out of three timeframes from time t1 to time t4. If performing the control shown with the line 803, by performing the third control from time t1 to time t4, electrical power for responding to the up demand can be provided. Therefore, as shown with the graph 810, by performing the second control, a fixed amount of electrical power for responding to the down demand can be provided, and also by performing the third control, electrical power for responding to the up demand can be provided.

A graph 820 shows electrical energy available to be provided from the battery 12d. By performing the second control in a fixed period from time t1 to time t4 as described above, electrical energy for responding to the down demand can be provided from the battery 12d. In addition, by performing the third control from time t1 to time t4, a fixed amount of electrical energy for responding to the up demand can be provided. As shown with the graph 820, the electrical energy available to be provided by performing the third control is electrical energy obtained by integrating electrical charging power that is used from time t1 to time t4. Also, the electrical energy available to be provided by performing the second control is electrical energy obtained by integrating electrical power supplied in the fixed period from time t1 to time t4 for performing the second control.

A line 831 of a graph 830 shows change in SOC over time based on a plan of charging/discharging the battery 12e of the vehicle 10e. As shown with the line 831, it is scheduled to discharge the battery 12e from time t2 to time t4 and supply the facility 44 with electrical power. A line 832 of the graph 830 shows change in SOC of the battery 12c over time when the plan of charging/discharging has been modified in order to provide the electrical power resource within the provision period. A line 833 of the graph 830 shows change in SOC of the battery 12e over time when the plan of charging/discharging has been modified with a different form in order to provide the electrical power resource within the provision period.

As shown with the line 832, the battery 12e is charged by discharging the battery 12e before time t1, and executing the third control from time t1 to time t2. In this way, a power charging amount can be increased from time t1 to time t2. Therefore, electrical power for responding to the up demand can be provided from the battery 12e. In addition, by performing the fourth control from time t2 to time t4 and thereby not supplying power to the facility 44, electrical power for responding to the up demand can be provided from the battery 12e.

By way of control in another form, as shown with the line 833, by discharging the battery 12e from time t1 to time t4 and thereby performing the second control from time t1 to time t2, a power supplying amount from the battery 12e can be increased. Therefore, electrical power for responding to the down demand can be provided from the battery 12e.

A graph 840 shows electrical power available to be provided from the battery 12e in each timeframe. As described above, by performing the third control from time t1 to time t2, electrical power for responding to the up demand can be provided. Similarly, the third control can be performed from time t2 to time t3 or from time t3 to time t4. Therefore, the third control can be performing in any fixed period from time t1 to time t4. Therefore, as shown with the graph 840, by performing the third control, a fixed amount of electrical power for responding to the up demand can be provided from time t1 to time t4. Further, by reducing a power supplying amount from the battery 12e from time t2 to time t4 by using the fourth control as described above, electrical power for responding to the up demand can be provided as compared with the plan of charging/discharging shown with the line 831.

A graph 850 shows electrical energy available to be provided from the battery 12e. By performing the third control in a fixed period from time t1 to time t4 as described above, a fixed amount of electrical energy for responding to the up demand can be provided. In addition, by performing the fourth control from time t2 to time t4 as described above, electrical energy for responding to the up demand can be provided as shown with graph 850. As shown with the graph 850, the electrical energy available to be provided by performing the fourth control is electrical energy obtained by integrating electrical charging power that is reduced from time t2 to time t4. In addition, by performing the second control from time t1 to time t2 as described above, electrical energy for responding to the down demand can be provided.

A graph 860 shows electrical power available to be provided from the station 30c in each timeframe. The graph 870 shows electrical energy available to be provided from the station 30c. The graph 860 is obtained by adding the graph 810 to the graph 840. The graph 870 is obtained by adding the graph 820 to the graph 850.

Note that, the estimating module 220 may estimate, based on a travel record of the vehicle 10 in the past and an action plan input by a user, leaving time of the vehicle 10 from the station 30 and entering time of the vehicle 10 into the station 30. The estimating module 220 may estimate, based on a charging/discharging history of the battery 12 in the past and a travel record of the vehicle 10, SOC of the battery 12 of the vehicle 10 at a time of entering the station and SOC of the battery 12 of the vehicle 10 at a time of leaving the station. The estimating module 220 may estimate, provided that SOC of the battery 12 of the vehicle 10 at a time of leaving the station can meet a target SOC, electrical power and electrical energy available to be provided by each battery 12.

The obtaining module 210 may obtain preference information representing whether a user of the vehicle 10 prefers that the battery 12 provides electrical power in response to a demand. The estimating module 220 may estimate, based on the preference information, electrical power and electrical energy available to be provided by the battery 12. For example, the estimating module 220 may exclude a battery 12 of a vehicle 10 associated with a user who does not prefer that the battery 12 provides electrical power in response to a demand, from batteries 12 for responding to the demand.

The obtaining module 210 may obtain specification information on the battery 12 and the station 30. The specification information may include: information representing electrical power available for the battery 12 to charge/discharge; information representing whether discharging from the battery 12 to the vehicle 10 is available; information representing electrical power available for the station 30 to charge/discharge; information representing whether the station 30 can supply power from the battery 12 to the electric power grid 90; and the like. The estimating module 220 may estimate, based on the specification information and within ranges of specifications of the battery 12 and the station 30, electrical power and electrical energy available to be provided by the battery 12.

The obtaining module 210 may obtain state information on the battery 12. The state information may include information representing deterioration degree of the battery 12, capacity of the battery 12, and temperature dependence of output power. The estimating module 220 may estimate, based on the state information on the battery 12, electrical power and electrical energy available to be provided by the battery 12. For example, the estimating module 220 may preferentially select a battery 12 of which deterioration degree is lower as a battery 12 being available for responding to a demand. The estimating module 220 may exclude a battery 12 of which deterioration degree is lower than a predefined value from batteries 12 for responding to a demand.

In order to limit progress of deterioration of the battery 12 and the station 30, which may be caused by responding to a demand, the estimating module 220 may set restrictions on an upper value and lower value of SOC of the battery 12, and a charging/discharging amount of the battery 12, and estimate electrical power and electrical energy available to be provided by the battery 12. The estimating module 220 may determine, by taking a financial advantage to a user of the vehicle 10 into account, and thus based on an electricity rate that may be incurred by charging the battery 12 and a reward which can be obtained by the user associated with the vehicle 10 by responding to a demand, whether to cause the battery 12 of the vehicle 10 to respond to the demand. For example, the estimating module 220 may determine not to cause the battery 12 to respond to the demand when the electricity rate is higher than the reward.

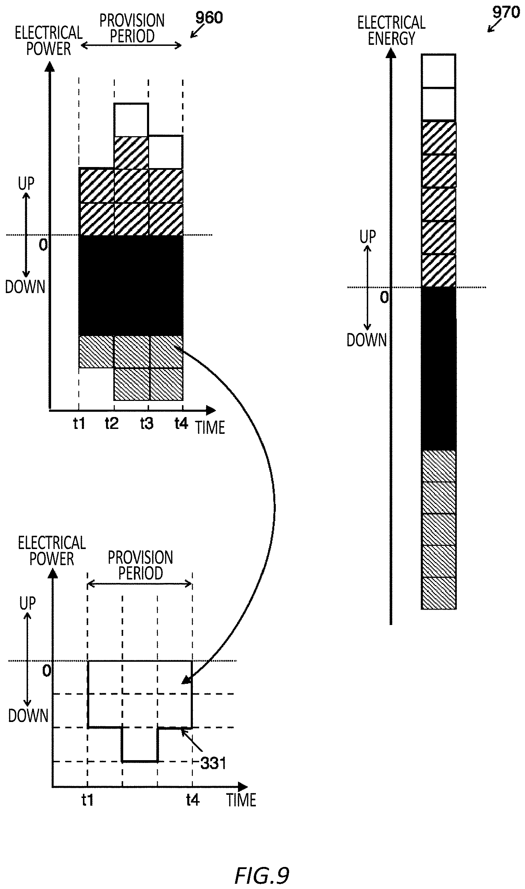

FIG. 9 schematically illustrates total electrical power and a total electrical energy available to be provided by all stations 30. A graph 960 shows the total electrical power available to be provided from the all stations 30 in each timeframe. A graph 970 shows the total electrical energy available to be provided from a station 30. The graph 960 is obtained by adding the graph 660, graph 760, and graph 860. The graph 970 is obtained by adding the graph 670, graph 870, and graph 870.

The required electrical power 331 in FIG. 5 shows the electrical power required for the system 100 to secure in every timeframe in order to respond to a demand in the provision period. As shown with FIG. 9, the allocating unit 230 allocates the total electrical power available to be provided, which is shown in FIG. 9, to the required electrical power 331 so that the required electrical power 331 becomes available to be provided. Specifically, the allocating unit 230 allocates from which station 30 the required electrical power 331 is provided, and form which battery 12 the required electrical power 331 is provided.

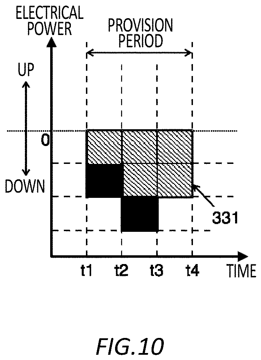

FIG. 10 schematically illustrates one example of an electrical power resource allocated by an allocating unit 230 to the required electrical power 331. In the example of the required electrical power 331 illustrated in FIG. 5, there is no timeframe that responds to the second request. As a result, an allocation of electrical power resources for responding to the first request is described herein.

The allocating unit 230 determines, for each timeframe, whether a total amount of electrical power resources available to be provided by the first control from the battery 12 is greater than or equal to an amount of electrical power resources required for providing the required electrical power 331. As shown in FIG. 9, in the timeframe from time t1 to time t3, the total amount of electrical power resources available to be provided by the first control from the battery 12 is less than the amount of electrical power resources required for providing the required electrical power 331. As a result, the allocating unit 230 needs to allocate the electrical power resource by both the first control and the second control in the timeframe from time t1 to time t3. In this case, the allocating unit 230 preferentially allocates the first control over the second control. Specifically, in the timeframe from time t1 to time t3, the allocating unit 230 allocates the total electrical power resource available to be provided by the first control from the battery 12, and also performs allocation such that the electrical power resource that cannot be provided by the first control is provided by the second control.

Here, in a timeframe from time t3 to time t4, the total amount of electrical power resources available to be provided by the first control from the battery 12 is greater than or equal to the amount of the required electrical power 331. As a result, the allocating unit 230 performs allocation such that, in the timeframe from time t3 to time t4, the electrical power resource is provided only by the first control.

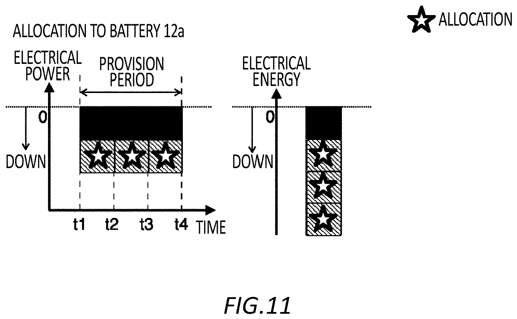

FIG. 11 shows a schematic diagram for explaining an electrical power resource allocated to battery 12a.

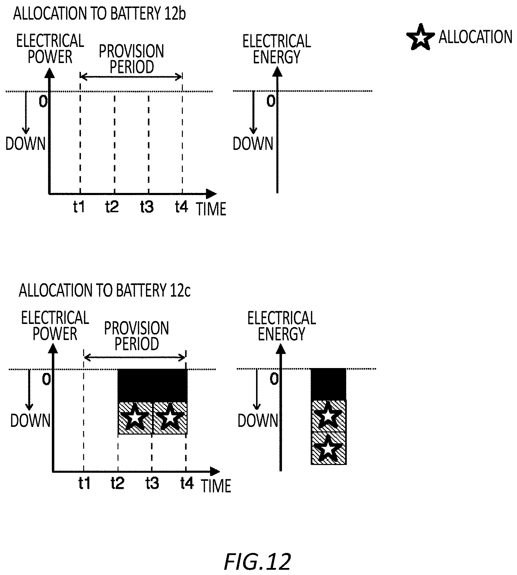

FIG. 12 shows a schematic diagram for explaining an electrical power resource allocated to battery 12b and battery 12c.

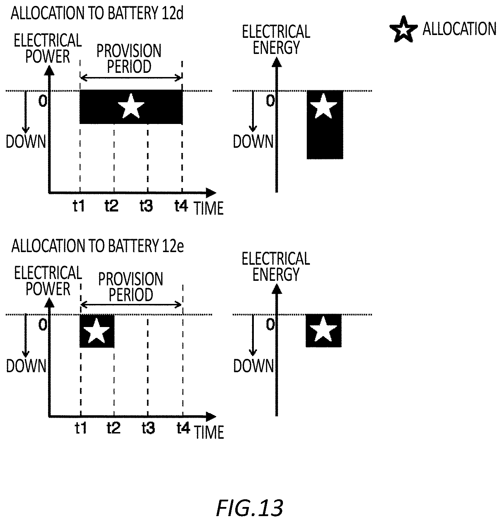

FIG. 13 shows a schematic diagram for explaining an electrical power resource allocated to battery 12d and battery 12e.

As shown in FIG. 11 to FIG. 13, the allocating unit 230 allocates, at least in the timeframe from time t1 to time t4, the electrical power resource to provide the total electrical power resource available to be provided by the first control from the battery 12a, and also allocates, in the timeframe from time t2 to time t4, the electrical power resource to provide the total electrical power resource available to be provided by the first control from the battery 12c.

As shown in FIG. 13, the allocating unit 230 allocates the electrical power resource such that the electrical power resource that cannot be provided by the first control in the timeframe from time t1 to time t3 is provided by the second control from the battery 12d and the battery 12e. Specifically, the battery 12 that can provide the electrical power resource by the second control in the timeframe from time t1 to time t2 is the battery 12a, the battery 12d, and the battery 12e. However, since the battery 12a is already allocated to provide the electrical power resource by the first control in the timeframe from time t1 to time t2, the allocating unit 230 excludes the battery 12a from the battery 12 that provides the electrical power resource by the second control in the timeframe from time t1 to time t2.

As a result, the allocating unit 230 decides that the battery 12d and/or battery 12e provides the electrical power resource by the second control in the timeframe from time t1 to time t3. Since the battery that can provide the electrical power resource in the timeframe from time t2 to time t3 is only the battery 12d, the allocating unit 230 allocates the electrical power resource such that the battery 12d that is one of the battery 12d or the battery 12e provides the electrical power resource by the second control in the timeframe from time t2 to time t3. Accordingly, the allocating unit 230 decides allocation of the electrical power resource such that the battery 12e that is the other of the battery 12d or the battery 12e provides the electrical power resource by the second control in the timeframe from time t1 to time t2. In this way, the electrical power resource can be allocated such that the battery 12d does not provide electrical power resources over consecutive timeframes.

As explained in regard to FIG. 10 to FIG. 13, the allocating unit 230 can distribute the batteries 12 that provide the electrical power resource within the provision period while preferentially performing the allocation of the electrical power resource by the first control over the one by the second control.

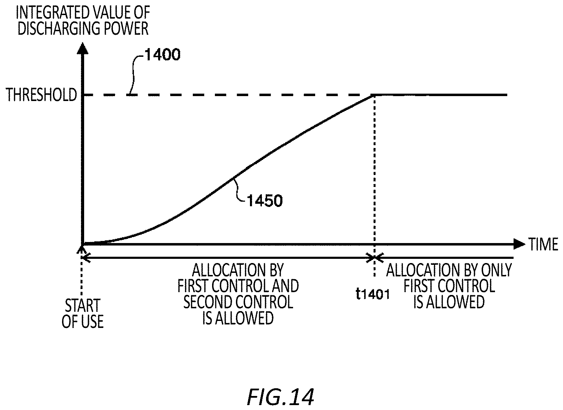

FIG. 14 is a graph for explaining a control for limiting the provision of the electrical power resource by a second control. The horizontal axis of the graph in FIG. 14 is the elapsed time from the time at which the vehicle 10 started to be used, and the vertical axis is the integrated value of the discharging power of the battery 12.

Based on an integrated value of the discharging power of battery 12, the classification module 250 classifies batteries into a battery that can be used for both the first control and the second control, and a battery that can be used for the first control but is not used for the second control. The "discharging power" does not include the electrical power used for the traveling of the vehicle 10 among the discharging power from the batteries 12. Specifically, the "discharging power" includes the electrical power discharged in the period during which the second control or the fourth control supplies power among the discharging power from the battery 12, and does not include the electrical power used for the traveling of the vehicle 10. By way of example, the "discharging power" may include only the electrical power supplied to the electric power grid 90 from the battery 12.

The classification module 250 classifies the battery 12 whose integrated value of discharging power does not exceed a predefined threshold as a battery that can be used for the first control and the second control, and classifies the battery 12 whose integrated value of discharging power is greater than or equal to the predefined threshold as a battery that can be used for the first control but is not used for the second control. The line 1400 shown in FIG. 14 illustrates the threshold. In the example in FIG. 14, the threshold is a fixed value.

The line 1450 shown in FIG. 14 illustrates a time evolution of the integrated value of the discharging power from the battery 12a included in the vehicle 10a. In the example in FIG. 14, after the use of the vehicle 10a is started, in the time t1401, the integrated value of the discharging power of the battery 12a meets the threshold. In this case, the classification module 250 classifies the battery 12a as a battery that can be used for the first control and the second control during the period from the time in which the use of the vehicle 10a is started to the time t1401, and classifies the battery 12a as a battery that can be used for the first control but is not used for the second control in a period on and after the time t1401.

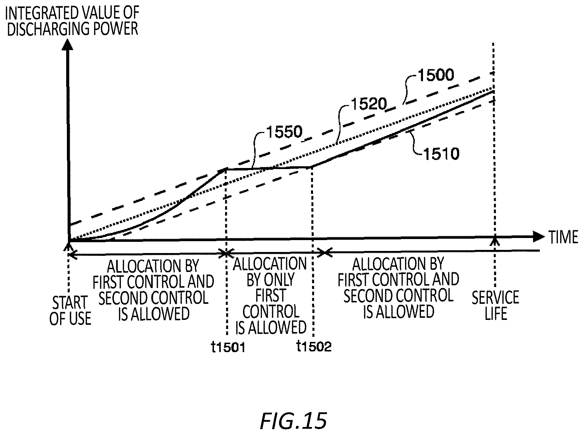

FIG. 15 is another graph for explaining a control for limiting the provision of the electrical power resource by a second control. The horizontal axis of the graph in FIG. 15 is the elapsed time from the time at which the vehicle 10 started to be used, and the vertical axis is the integrated value of the discharging power of the battery 12.

The line 1550 shown in FIG. 15 illustrates a time evolution of the integrated value of the discharging power from the battery 12a. The line 1500 and the line 1510 shown in FIG. 15 illustrate thresholds used for classifying the batteries 12 by the classification module 250. The line 1500 illustrates a first threshold, and the line 1510 illustrates a second threshold lower than the first threshold. In the example illustrated in FIG. 15, the first threshold and the second threshold are changed depending on the usage time of the vehicle 10. Specifically, the first threshold and the second threshold are increased over time in at least a part of a period until the service life of the vehicle 10.

The line 1520 shown in FIG. 15 is a reference value of the discharging power from the start of use of the vehicle 10 until the service life of the vehicle 10. The reference value changes depending on the usage time of the vehicle 10. Specifically, the reference value is increased over time in at least a part of a period until the service life of the vehicle 10. The first threshold is set to be higher than the reference value, and the second threshold is set to be lower than the reference value.

In the example in FIG. 15, after the use of the vehicle 10a is started, in the time t1501, the integrated value of the discharging power of the battery 12a meets the first threshold. In this case, the classification module 250 sets the battery 12a as a battery that can be used for the first control and the second control during the period from the time in which the use of the vehicle 10a started to the time t1501, and sets, from the time t1501, the battery 12a as a battery that can be used for the first control but is not used for the second control. In this way, since the battery 12a is not used for the second control, the integrated value of the discharging power of the battery 12a is constant from time t1501 until the integrated value of the discharging power of the battery 12a meets the second threshold.

At time t1502, if the integrated value of the discharging power of the battery 12a meets the second threshold, the classification module 250 sets, from the time t1501, the battery 12a as a battery that can be used for the first control and the second control. In this way, since the battery 12a can be used for the second control, the integrated value of the discharging power of the battery 12a can be increased from time t1502.

As shown in FIG. 15, by setting the first threshold and the second threshold depending on the usage time of the vehicle 10, the integrated value of the discharging power of the battery 12 can be prevented from deviating from the reference value until the usage time of the vehicle 10 meets the service life. In this way, the integrated value of the discharging power of the battery 12 can be prevented from increasing too much before the usage time of the vehicle 10 meets the service life. As a result, deterioration of the battery 12 until the service life of the vehicle 10 elapses can be prevented from progressing excessively. In this way, the battery 12 can be used for the power supply to the electric power grid 90 in a range in which the deterioration of the battery 12 does not progress excessively while ensuring that the vehicle 10 travels a distance greater than or equal to a predefined distance until the service life of the vehicle 10 elapses.

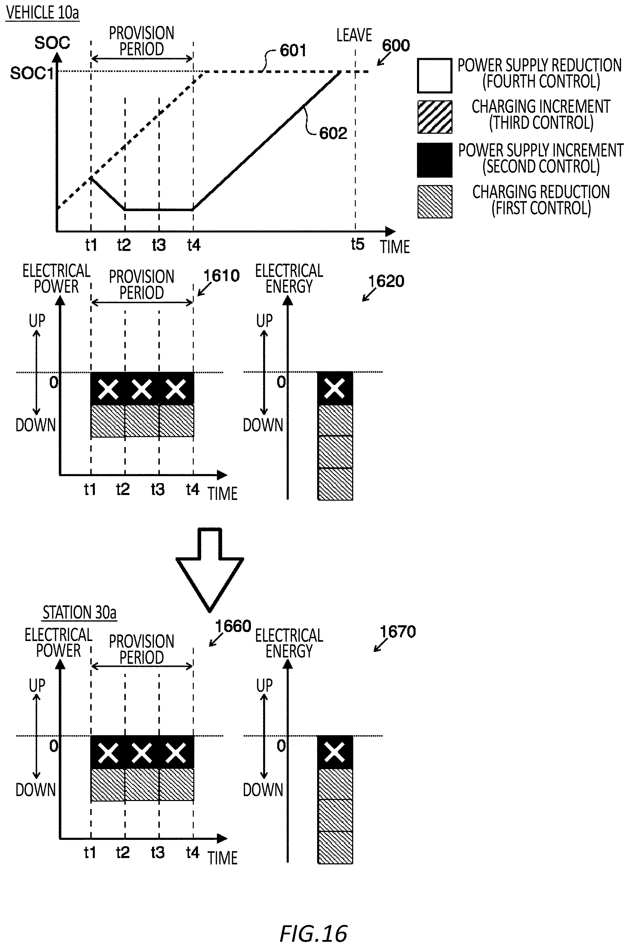

FIG. 16 is a diagram for explaining one example of a method of calculating an electrical power resource available to be provided by a vehicle 10a considering an integrated value of discharging power. FIG. 16 is a diagram corresponding to FIG. 6. That is, FIG. 16 illustrates a case in which the integrated value of the discharging power of the battery 12a included in the vehicle 10a meets a threshold and the classification module 250 classifies the battery 12a as a battery that can be used for the first control but is not used for the second control. The difference from FIG. 6 is described here.

Since the classification module 250 classifies the battery 12a as a battery that is not used for the second control, the estimating module 220 determines that the battery 12a can provide electrical power resource only by the first control without providing the electrical power resource by the second control. A graph 1610 shows electrical power available to be provided from the battery 12a in each timeframe. The mark "x" in the graph 1610 illustrates that the estimating module 220 considers, based on the classification result of the classification module 250, that the battery 12a cannot provide the electrical power resource by the second control. In this way, the electrical energy available to be provided from the battery 12a is only the electrical energy by first control as shown with a graph 1620.

The graph 1620 shows electrical energy available to be provided from the battery 12a. Since the first control can be executed in all timeframes from time t1 to time t4, it is represented with electrical power resources of three timeframes. On the other hand, electrical power resource by the second control is not provided.

A graph 1660 shows electrical power available to be provided from the station 30a in each timeframe. The graph 1670 shows electrical energy available to be provided from the station 30a. Because the station 30a can only be connected to one vehicle 10a, the graph 1660 is identical to the graph 1610, and the graph 1670 is identical to the graph 1620.

In regard to FIG. 14 to FIG. 16, the case in which the classification module 250 classifies the battery 12 depending on the integrated value of the discharging power of the battery 12 is described. However, the integrated value of the discharging power of the battery 12 is one example of an index of deterioration degree of the battery 12. As the index of the deterioration degree of the battery 12, the soundness of the battery 12 can be employed. For example, the classification module 250 may classify the battery 12 depending on an SOH (State of Health), instead of the integrated value of the discharging power of the battery 12 or in addition to the integrated value of the discharging power of the battery 12. For example, the classification module 250 may classify, in a case in which the SOH of the battery 12 is greater than or equal to a predefined value, the battery 12 as a battery that can be used for both the first control and the second control, and classify, in a case in which the SOH of the battery 12 is less than or equal to the predefined value, the battery 12 as a battery that can be used for the first control but is not used for the second control.

As explained in regard to FIG. 14 to FIG. 16, since it is possible to switch to use the battery 12 or not for the second control depending on the integrated value of the discharging power of the battery 12, the deterioration of the battery 12 can be kept from being excessively progressed while the battery 12 is used for providing the electric power grid 90 with the electrical power resource. In this way, while having an advantage obtained by the battery 12 providing the electric power grid 90 with the electrical power resource, a value of the battery 12 can be maintained.

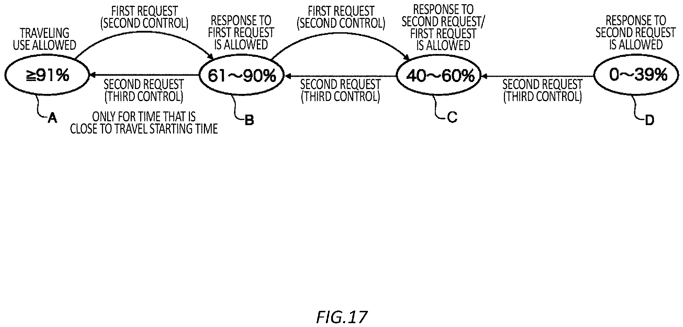

FIG. 17 is a diagram for explaining a control that depends on SOC for the batteries 12 to provide the electrical power resource. The estimating module 220 switches, depending on a range to which the SOC of the battery 12 belongs, controls for providing the electrical power resource by the battery 12.

Specifically, the estimating module 220 classifies the battery 12 into group A to group D. By way of example, the group A is a battery 12 having an SOC of 91% or higher and 100% or lower. The group B is a battery 12 having an SOC of 61% or higher and 90% or lower. The group C is a battery 12 having an SOC of 40% or higher and 60% or lower. The group D is a battery 12 having an SOC of 0% or higher and 39% or lower.

The battery 12 belonging to the group A is a battery that can be used for traveling of the vehicle 10. The estimating module 220 considers that the battery 12 belonging to the group A can provide the electrical power resource by the second control in response to a first request.

The estimating module 220 considers that the battery 12 belonging to the group B can provide the electrical power resource by the second control in response to a first request. The estimating module 220 considers that the battery 12 belonging to the group B can provide the electrical power resource by the third control in response to a second request when a predefined condition is met. Specifically, the estimating module 220 considers that the battery 12 belonging to the group B can provide the electrical power resource by the third control in response to the second request provided that the SOC does not exceed 90%. The estimating module 220 considers that the battery 12 belonging to the group B can provide the electrical power resource by the third control in response to the second request even if the SOC exceeds 90%, provided that the vehicle 10 is predicted to leave from the station 30 within a predefined period of time from the current time.

As above, the estimating module 220 estimates an amount of electrical power resources that can be provided to the electric power grid 90 by the third control by each battery 12 such that the SOC of each battery 12 does not exceed 90%. Especially, the estimating module 220 estimates the amount of electrical power resources that can be provided to the electric power grid 90 such that an SOC of a battery 12 that is not predicted to be used in a predefined period of time does not exceed 90% while permitting an SOC of a battery 12 that is predicted to be used in a predefined period of time among the batteries 12 to exceed 90%. In this way, deterioration of the battery 12 can be prevented from progressing excessively while the battery 12 is used for providing the electric power grid 90 with the electrical power resource. Especially, if the battery 12 is predicted to be used for traveling of the vehicle 10 in a predefined period of time, by permitting the provision of the electrical power resource by the third control even if the SOC exceeds 90%, the battery 12 can be prevented from left for a long time in a state in which the SOC is high. In this way, the SOC of the battery 12 can be prevented from being insufFicient when the vehicle 10 is used while suppressing the deterioration of the battery 12.

The estimating module 220 considers that the battery 12 belonging to the group C can provide the electrical power resource by the third control and the like in response to a first request and/or the second request. Note that the estimating module 220 considers that the battery 12 belonging to the group C can provide the electrical power resource by the second control in response to a first request when a predefined condition is met. Specifically, the estimating module 220 considers that the battery 12 belonging to the group C can provide the electrical power resource by the second control in response to the first request provided that the SOC is not lower than 40%. In this way, the estimating module 220 can estimate the amount of electrical power resources that can be provided to the electric power grid 90 by the second control by the battery 12 such that the state of charge of the battery 12 is not lower than 40%.

The estimating module 220 considers that the battery 12 belonging to the group D can provide the electrical power resource by the third control in response to a second request. The battery 12 belonging to the group D is not used as a battery for providing the electrical power resource in response to the first request.

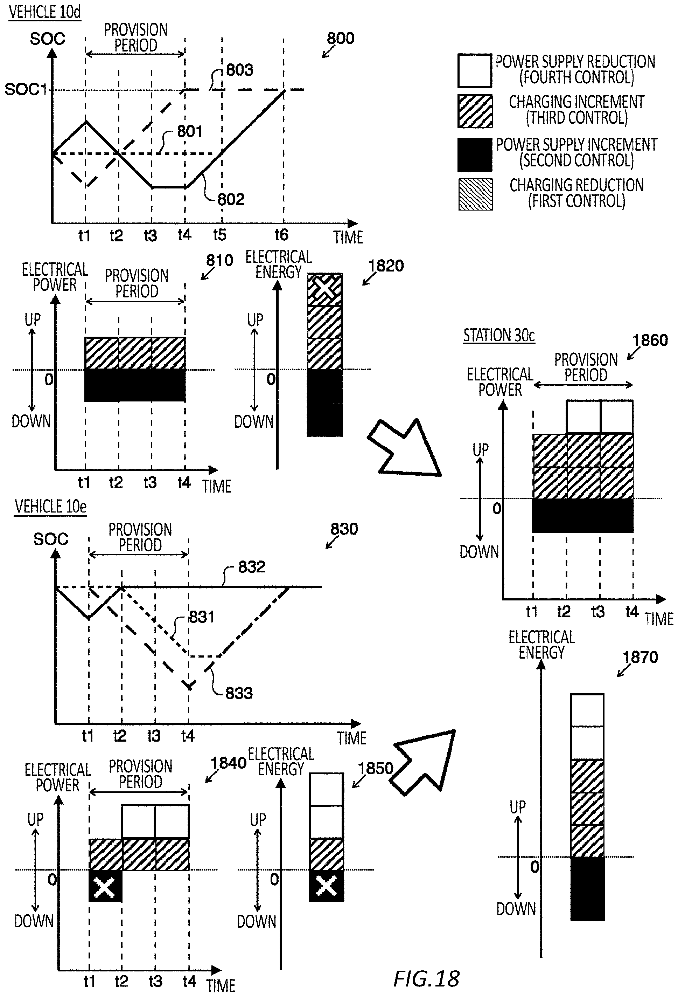

FIG. 18 is a diagram for explaining one example of a method of calculating an electrical power resource available to be provided by a vehicle 10d and a vehicle 10e considering an integrated value of discharging power. FIG. 18 is a diagram corresponding to FIG. 8. Specifically, FIG. 18 illustrates a case in which an SOC of the battery 12d of the vehicle 10d may exceed 90% by the third control, and an SOC of the battery 12e of the vehicle 10e may be less than 40% by the second control. The difference from FIG. 8 is described here.

A graph 810 shows electrical power available to be provided from the battery 12d in each timeframe. The battery 12d can perform the third control from time t1 to time t4 as explained in regard to FIG. 8. Here, if it is determined that the SOC exceeds 90% by performing the third control of three timeframes on the battery 12d, the estimating module 220 permits the third control to be performed on the battery 12d up to two timeframes. That is, the third control is permitted for a period of any two timeframes from the period from time t1 to time t4.

A graph 1820 shows electrical energy available to be provided from the battery 12d. The mark "x" of the graph 1820 illustrates that the estimating module 220 considers that the battery 12d cannot provide the electrical power resource by the third control. In this way, as shown with graph 1820, electrical energy available to be provided by the third control from the battery 12d is electrical energy of two timeframes.

A graph 1840 shows electrical power available to be provided from the battery 12e in each timeframe. The battery 12e can perform the third control from time t1 to time t4 and can perform the fourth control from time t2 to time t4, as explained in regard to FIG. 8. Here, if it is determined that the SOC is less than 40% by performing the second control from time t1 to time t2, the estimating module 220 considers that the second control cannot be performed on the battery 12e. The mark "x" of the graph 1840 illustrates that the estimating module 220 considers that the battery 12e cannot provide the electrical power resource by the second control.

A graph 1850 shows electrical energy available to be provided from the battery 12e. As shown with the graph 1850, it is determined that the electrical energy of one timeframe can be provided by the third control from the battery 12e and the electrical energy of two timeframes can be provided by the fourth control from the battery 12e. Here, the estimating module 220 considers that the electrical power cannot be provided by the second control from the battery 12e.

A graph 1860 shows electrical power available to be provided from the station 30c in each timeframe. The graph 1870 shows electrical energy available to be provided from the station 30c. The graph 1860 is obtained by adding the graph 810 to the graph 1840. The graph 1870 is obtained by adding the graph 1820 to the graph 1850.

As explained in regard to FIG. 17 to FIG. 18 and the like, the estimating module 220 estimates an amount of electrical power resources that can be provided to the electric power grid 90 by the third control such that the state of charge of the battery 12 does not exceed a predefined value. Further, the estimating module 220 estimates the amount of electrical power resources that can be provided to the electric power grid 90 by the second control such that the state of charge of the battery 12 is not lower than the predefined value. In this way, the deterioration of the battery 12 can be kept from being excessively progressed while the battery 12 is used for providing the electric power grid 90 with the electrical power resource. In this way, while having an advantage obtained by the battery 12 providing the electric power grid 90 with the electrical power resource, a value of the battery 12 can be maintained.

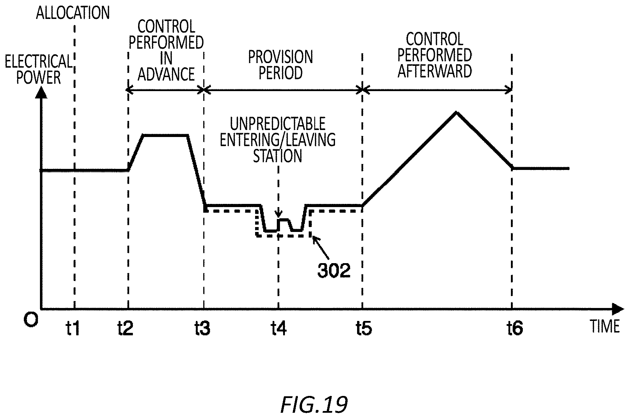

FIG. 19 illustrates one example of change in consumption power over time caused by control of the station 30. In FIG. 19, a provision period is from time t3 to time t5.

At time t1, the allocating unit 230 allocates from which station 30 and battery 12 required electrical power is provided in the provision period. The allocating unit 230 may allocate at a timing prior to starting time of the provision period by a predefined period of time. The allocating unit 230 may allocate, in a day including the provision period, at a predefined time before starting time of the provision period.

At time t2 before the starting time of the provision period, the controlling module 240 controls charging/discharging of the battery 12 in advance so that required electrical power can be provided from the battery 12 in the provision period. For example, the controlling module 240 causes, if there is a possibility of reducing consumption power depending on a down demand within the provision period, the battery 12 to be charged in advance. Control of causing the battery 12 to be charged before the starting time of the provision period, such as that shown with the line 802 in FIG. 8, falls within the control performed in advance.

In the provision period, the controlling module 240 controls charging/discharging of the battery 12 by controlling the station 30 depending on a demand. At this time, the controlling module 240 controls the charging/discharging of the battery 12 based on a result of allocation executed by the allocating unit 230. If consumption power increases due to a vehicle 10 unpredictably entering or leaving the station at time t4, the controlling module 240 selects, among batteries 12 not allocated by the allocating unit 230 as a battery 12 for providing required electrical power, a battery 12 that can provide electrical power for serving the increased consumption power, and provides electrical power for serving the increased consumption power by performing the first control or the second control on the selected battery 12.

Once the provision period ends at time t5, the controlling module 240 controls charging/discharging of the battery 12 in order to recover the required electrical power provided by the battery 12 in the provision period. For example, the controlling module 240 causes, if the consumption power is reduced in response to a down demand within the provision period, the battery 12 to be charged after the provision period. For example the controlling module 240 causes, as shown with the line 802 in FIG. 8, the battery 12 to be charged before the starting time of the provision period. Control of causing the battery 12 to be charged after the provision period, such as that shown with the line 602 in FIG. 6, falls within control performed afterward. At this time, it is desirable that the controlling module 240 controls charging/discharging of the battery 12 such that change in consumption power over time after the provision period is less than a predefined value.

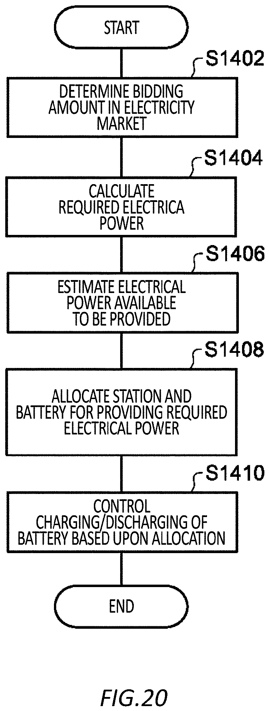

FIG. 20 is a flowchart showing procedures of processing executed by the system 100. In S1402, the estimating module 220 determines a bidding amount for the electricity market. For example, the estimating module 220 estimates, by using a prediction model for estimating electrical power and electrical energy available to be provided in response to a demand, the electrical power and the electrical energy available to be provided, and determines the bidding amount based on the estimated electrical power and electrical energy. The prediction model may be generated in advance based on a charging/discharging history of a battery 12 in the past. For example, the prediction model may be generated by machine learning using electrical power and electrical energy available to be provided in every timeframe, which is calculated based on a charging/discharging history of the battery 12 in the past. The prediction model may use a point of time information as an input, and output an estimation value of electrical power and electrical energy available to be provided at a point of time shown with the point of time information that is input. The input for the prediction model may include any one of: a day of the week information; weekday/weekend distinction information; season information; and timeframe information. The input for the prediction model may further include at least one of temperature information or weather information.

In S1404, the estimating module 220 estimates required electrical power. For example, as explained in regard to FIG. 3, the estimating module 220 may calculate target electrical power based on electrical power contracted in an electricity market, and estimate the required electrical power from a difference between the target electrical power and an estimated electrical power.

In S1406, electrical power available to be provided by a station 30 and a battery 12 is estimated. For example, the estimating module 220 estimates, by using the method explained in regard to FIGs. 6 to 8, electrical power and electrical energy available to be provided by a station 30 and each battery 12 by using each of the first control, second control, third control, and fourth control.

In S1408, the allocating unit 230 allocates a station 30 and a battery 12 for providing the required electrical power. For example, the allocating unit 230 allocates the station 30 and the battery 12 which provide a required electrical power by using the method explained in regard to FIG. 9 from FIG. 13, FIG. 16, FIG. 18 and the like. In S1410, the controlling module 240 controls charging/discharging of the battery 12 based on the allocation result obtained in 1408 and a demand.

As explained above, according to the system 100, by taking a usage prediction on the vehicle 10 and the battery 12 into account, electrical power and electrical energy available to be provided by each battery 12 can be estimated with high accuracy. Further according to the system 100, based on the electrical power and the electrical energy available to be provided by each battery 12, a battery 12 for providing electrical power depending on a demand can be allocated, and also electrical power and electrical energy which should be provided by each battery 12 in every timeframe can be allocated to each battery 12. Conventionally, it has been uneasy to predict electrical energy available to be provided by a battery mounted on a mobile object in advance because the battery mounted on the mobile object may be disengaged from the electric power grid 90 in irregular timeframes. Therefore, it has been required to secure an extra number of auxiliary batteries in order to use batteries mounted on the mobile object for adjusting power supply and demand of the electric power grid 90. Against this, according to the control performed by the system 100 described above, it is possible to provide the electric power grid 90 with more electrical power by using a fewer number of batteries 12.

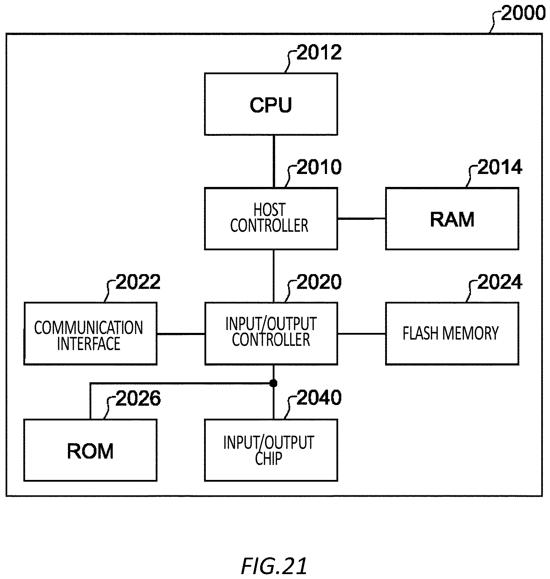

Fig. 21 shows an example of a computer 2000 in which a plurality of embodiments of the present invention can be entirely or partially embodied. A program installed in the computer 2000 can cause the computer 2000 to: function as the system according to the embodiments or each unit of the system, or a device such as various pieces of control devices and the like that function as the system 100 and the like or each unit of the device; execute an operation associated with the system or each unit of the system, or the device or each unit of the device; and/or execute the process according to an embodiment or a stage of the process. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with other electronic devices via a network. The flash memory 2024 stores a program and data used by the CPU 2012 in the computer 2000. The ROM 2026 stores a boot program or the like executed by the computer 2000 during activation, and/or a program depending on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer-readable storage medium such as a CD-ROM, a DVD-ROM, or a memory card. The RAM 2014, the ROM 2026, or the flash memory 2024 is an example of the computer-readable storage medium. The program is installed in the flash memory 2024, the RAM 2014 or the ROM 2026 and executed by the CPU 2012. Information processing written in these programs is read by the computer 2000, and provides cooperation between the programs and the various types of hardware resources described above. A device or a method may be actualized by executing operations or processing of information depending on a use of the computer 2000.

For example, when communication is executed between the computer 2000 and an external device, the CPU 2012 may execute a communication program loaded in the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 to be read into the RAM 2014, and execute various types of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various types of processing including various types of operations, information processing, conditional judgement, conditional branching, unconditional branching, information retrieval/replacement, or the like described in this specification and specified by instruction sequences of the programs, and write back a result into the RAM 2014. In addition, the CPU 2012 may search for information in a file, a database, or the like in the recording medium. For example, when multiple entries, each having an attribute value of a first attribute associated with an attribute value of a second attribute, is stored in the recording medium, the CPU 2012 may search for an entry having a designated attribute value of the first attribute that matches a condition from the multiple entries, and read the attribute value of the second attribute stored in the entry, thereby obtaining the attribute value of the second attribute associated with the first attribute that satisfies a predefined condition.

The programs or software modules explained above may be stored in the computer-readable storage medium on the computer 2000 or in the vicinity of the computer 2000. A recording medium such as a hard disk or a RAM provided in a server system connected to a dedicated communication network or the Internet can be used as the computer-readable storage medium. A program stored in the computer-readable storage medium may be provided to the computer 2000 via a network.

A program that is installed in the computer 2000 and causes the computer 2000 to function as the system 100 may work on the CPU 2012 and the like to cause the computer 2000 to function as each unit of the system 100, respectively. Information processing described in these programs is read into the computer 2000 and then functions as each unit of the system 100, which is a concrete means obtained from cooperation of software and the various types of hardware resources described above. Then, by using these concrete means for computing or processing information depending on an intended use of the computer 2000 in the present embodiment, a particular system 100 is formed depending on the intended use.

Various embodiments have been explained with reference to the block diagrams and the like. In the block diagrams, each block may represent (1) a stage of a process in which an operation is executed, or (2) each unit of the device having a role in executing the operation. A specific stage and unit may be implemented by a dedicated circuit, a programmable circuit supplied with computer-readable instructions stored on a computer-readable storage medium, and/or a processor supplied with computer-readable instructions stored on a computer-readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and other logical operations, and a memory element such as a flip-flop, a register, a field programmable gate array (FPGA), a programmable logic array (PLA), or the like.

The computer-readable storage medium may include any tangible device capable of storing instructions to be executed by an appropriate device. Thereby, the computer-readable storage medium having instructions stored therein forms at least a part of a product including instructions which can be executed to provide means for executing processing procedures or operations specified in the block diagrams. An example of the computer-readable storage medium may include an electronic storage medium, a magnetic storage medium, an optical storage medium, an electromagnetic storage medium, or a semiconductor storage medium. A more specific example of the computer-readable storage medium may include a floppy (registered trademark) disk, a diskette, a hard disk, a random-access memory (RAM), a read-only memory (ROM), an erasable programmable read-only memory (EPROM or flash memory), an electrically erasable programmable read-only memory (EEPROM), a static random-access memory (SRAM), a compact disc read-only memory (CD-ROM), a digital versatile disc (DVD), a Blu-ray (registered trademark) disc, a memory stick, or an integrated circuit card.

The computer-readable instruction may include an assembler instruction, an instruction-set-architecture (ISA) instruction, a machine instruction, a machine dependent instruction, a microcode, a firmware instruction, state-setting data, or either of source code or object code written in any combination of one or more programming languages including an object oriented programming language such as Smalltalk (registered trademark), JAVA (registered trademark), and C++, and a conventional procedural programming language such as a "C" programming language or a similar programming language.

Computer-readable instructions may be provided to a processor of a general purpose computer, a special purpose computer, or other programmable data processing device, or to programmable circuit, locally or via a local area network (LAN), wide area network (WAN) such as the Internet, and a computer-readable instruction may be executed to provide means for executing operations specified in the explained processing procedures or block diagrams. An example of the processor includes a computer processor, processing unit, microprocessor, digital signal processor, controller, microcontroller, or the like.

While the embodiments of the present invention have been explained, the technical scope of the present invention is not limited to the above-described embodiments. It is apparent to persons skilled in the art that various alterations or improvements can be added to the above-described embodiments. It is also apparent from the description of the claims that the embodiments to which such alterations or improvements are made can also fall within the technical scope of the present invention.

The operations, procedures, steps, and stages etc. of each process performed by a device, system, program, and method shown in the claims, specification, or diagrams can be executed in any order as long as the order is not indicated by "before", "prior to", or the like and as long as the output from a previous process is not used in a later process. Even if the operation flow is explained using phrases such as "first" or "next" in the claims, specification, or drawings, it does not necessarily mean that the process must be performed in this order.

### EXPLANATION OF REFERENCES

5: electrical power system;
10: vehicle;
20: vehicle;
42: private house;
44: facility;
12: battery;
30: station;
70: electrical power user;
80: electrical power generator;
90: electric power grid;
180: server;
190: communication network;
200: processing module;
210: obtaining module;
220: estimating module;
230: allocating unit;
240: controlling module;
250: classification module;
280: storage module;
290: communication device;
301: predicted electrical power;
302: target electrical power;
311: estimated electrical power;
331: required electrical power;
100: system;
2000: computer;
2010: host controller;
2012: CPU;
2014: RAM;
2020: input/output controller;
2022: communication interface;
2024: flash memory;
2026: ROM;
2040: input/output chip.

## Claims

1. A computer system that controls charging of multiple movable batteries, comprising:
a controlling module that provides an electric power grid with an electrical power resource by performing a charging increment control for increasing power charging amounts for the multiple movable batteries or a power supply increment control for increasing power supplying amounts from the multiple movable batteries, in response to a power consumption increment request for requesting power consumption to be increased or a power consumption reduction request for requesting power consumption to be reduced; and
an estimating module that estimates, based on predicted usage situations of the multiple movable batteries, an amount of electrical power resources that can be provided to the electric power grid by each of the multiple movable batteries by the charging increment control or the power supply increment control, wherein
the predicted usage situations of the multiple movable batteries include a predicted state of charge of the multiple movable batteries, and
the estimating module estimates the amount of electrical power resources that can be provided to the electric power grid by each of the multiple movable batteries by the charging increment control such that a state of charge of each of the multiple movable batteries does not exceed a predefined value, or estimates the amount of electrical power resources that can be provided to the electric power grid by each of the multiple movable batteries by the power supply increment control such that the state of charge of each of the multiple movable batteries is not lower than a predefined value.

2. The computer system according to claim 1, wherein
the controlling module provides the electrical power resource with the electric power grid by performing the charging increment control in response to the power consumption increment request,
the estimating module estimates, based on the predicted usage situations of the multiple movable batteries, the amount of electrical power resources that can be provided to the electric power grid by each of the multiple movable batteries by the charging increment control, and
the estimating module estimates the amount of electrical power resources that can be provided to the electric power grid by each of the multiple movable batteries by the charging increment control such that the state of charge of each of the multiple movable batteries does not exceed a predefined value.

3. The computer system according to claim 2, wherein the predicted usage situations of the multiple movable batteries further include timeframes in which the multiple movable batteries are predicted to be used.

4. The computer system according to claim 3, wherein the estimating module estimates, among the multiple movable batteries, the amount of electrical power resources that can be provided to the electric power grid such that a state of charge of a battery that is not predicted to be used in the predefined period of time does not exceed a predefined value while permitting a state of charge of a battery, among the multiple movable batteries, that is predicted to be used in the predefined period of time to exceed the predefined value.

5. The computer system according to claim 3 or 4, wherein the estimating module estimates the predicted usage situations of the multiple movable batteries based on a usage history of the multiple movable batteries in a past and a usage plan of the multiple movable batteries in a future.

6. The computer system according to any one of claims 2 to 5, wherein
the predicted usage situations of the multiple movable batteries include timings at which the multiple movable batteries are predicted to be charged or discharged; and
in a period in which an electrical power resource contracted in an electricity market should be provided to the electric power grid, the estimating module estimates the amount of electrical power resources that can be provided to the electric power grid by each of the multiple movable batteries by the charging increment control, by estimating an amount of electrical power resources available to be provided to the electric power grid by changing the timings of charging or discharging the multiple movable batteries for the timings at which the multiple movable batteries are predicted to be charged or discharged.

7. The computer system according to claim 6, wherein the controlling module performs the charging increment control, in response to the power consumption increment request being received in the period in which the electrical power resource should be provided to the electric power grid and based on the amount of electrical power resources available to be provided to the electric power grid that is estimated by the estimating module.

8. The computer system according to any one of claims 2 to 7, wherein
the controlling module further provides the electric power grid with the electrical power resource, by performing at least one of a charging reduction control for reducing the power charging amounts for the multiple movable batteries or the power supply increment control in response to the power consumption reduction request and performing at least one of the charging increment control or a power supply reduction control for reducing power supplying amounts from the multiple movable batteries to an outside in response to the power consumption increment request; and
the estimating module estimates, based on the predicted usage situations of the multiple movable batteries, the amount of electrical power resources that can be provided to the electric power grid by each of the charging reduction control and the power supply increment control, the charging increment control and the power supply reduction control by each of the multiple movable batteries such that the state of charge of each of the multiple movable batteries does not exceed a predefined value.

9. The computer system according to any one of claims 1 to 8, wherein
the controlling module provides the electrical power resource with the electric power grid by performing the power supply increment control in response to the power consumption reduction request,
the estimating module estimates, based on the predicted usage situations of the multiple movable batteries, the amount of electrical power resources that can be provided to the electric power grid by each of the multiple movable batteries by the power supply increment control, and
the estimating module estimates the amount of electrical power resources that can be provided to the electric power grid by each of the multiple movable batteries by the power supply increment control such that the state of charge of each of the multiple movable batteries is not lower than a predefined value.

10. The computer system according to any one of claims 1 to 9, wherein the multiple movable batteries include batteries mounted on vehicles.

11. The computer system according to claim 10, wherein the multiple movable batteries include batteries that are mounted on the vehicles and exchangeable at multiple stations.

12. A program that when executed by a computer, causes the computer to function as the computer system according to any one of claims 1 to 10.

13. A method comprising:
providing an electric power grid with an electrical power resource by performing a charging increment control for increasing power charging amounts for multiple movable batteries or a power supply increment control for increasing power supplying amounts from the multiple movable batteries, in response to a power consumption increment request for requesting power consumption to be increased or a power consumption reduction request for requesting power consumption to be reduced; and
estimating, based on predicted usage situations of the multiple movable batteries, an amount of electrical power resources that can be provided to the electric power grid by each of the multiple movable batteries by the charging increment control or the power supply increment control, wherein
the predicted usage situations of the multiple movable batteries include a predicted state of charge of the multiple movable batteries, and
in the estimating the amount of electrical power resources that can be provided to the electric power grid by the charging increment control, the amount of electrical power resources that can be provided to the electric power grid by each of the multiple movable batteries by the charging increment control is estimated such that the state of charge of each of the multiple movable batteries does not exceed a predefined value, or the amount of electrical power resources that can be provided to the electric power grid by each of the multiple movable batteries by the power supply increment control is estimated such that the state of charge of each of the multiple movable batteries is not lower than a predefined value.
